# EUROPEAN PATENT SPECIFICATION

(11) **EP 4 659 013 B1**
(45) Date of publication and mention of the grant of the patent: **25.11.2026**
(21) Application number: 24709931.0
(22) Date of filing: 29.01.2024
(51) Int. Cl.: G01N 30/60

(54) **LIQUID CHROMATOGRAPHY COLUMN HOLDER**
FLÜSSIGKEITSCHROMATOGRAPHIESÄULENHALTER
SUPPORT DE COLONNE DE CHROMATOGRAPHIE LIQUIDE

(30) Priority: 30.01.2023 US 202363441904 P
(43) Date of publication of application: 10.12.2025
(73) Proprietor: Waters Technologies Corporation, Milford, MA 01757 (US)
(72) Inventor: MANN, Andrew, Rumford, Rhode Island 02916 (US); ANDRADE, Gordon, Douglas, Massachusetts 01516 (US)
(74) Representative: Forresters IP LLP
(86) International application number: PCT/US2024/013329
(87) International publication number: WO 2024/163334

(56) References cited:
- CN-U- 213 643 194
- CN-U- 213 933 726
- US-A1- 2006 008 390

## Description

### RELATED APPLICATION

This application claims the benefit of the earlier filing date of U.S. Provisional Patent Application Serial No. 63/441,904 filed January 30, 2023 and titled "Liquid Chromatography Column Holder".

### FIELD OF THE INVENTION

The invention relates generally to liquid chromatography. More particularly, the invention relates to a device and system for holding a liquid chromatography column.

### BACKGROUND

Liquid chromatography allows for fast and efficient separation and characterization of analytes within a given sample. Components of a liquid chromatography system (e.g. a high performance liquid chromatography (HPLC) system or an ultra-high performance liquid chromatography (UHPLC) system) include high pressure pumps which facilitate the movement of an aqueous phase through the system. This aqueous phase (or mobile phase) comprises a solvent that is used to initially equilibrate the liquid chromatography system. The solvent also provides an aqueous milieu for analytes to traverse through the entire liquid chromatography system. Finally, the mobile phase comprises solvent which elutes analytes from a liquid chromatography column.

Another component of a liquid chromatography system is the chromatography separations column. The column comprises a solid phase. The solid phase, in combination with the mobile phase, effectuates differential separation of analytes contained within a sample matrix. The solid phase generally consists of chemical polymers that interact with a certain class of analytes. For example, ion-exchange HPLC columns have a solid phase chemistry that interacts specifically with analytes that are ions. To illustrate this principle, anion-exchange columns have a solid phase cationic functional group that will interact, in a noncovalent manner, with anions present in the sample matrix. Depending upon the mobile phase conditions passing through the column, certain anions of the sample will be eluted from the column's solid phase, while other anions of the sample will be retained.

Once the analytes are eluted from the column, they traverse into and through a detector. There are a variety of detection systems that can be employed in a liquid chromatography system. For example, there are ultra-violet ("UV") detectors that detect analytes within the UV range.

The fluidics of any HPLC or UHPLC system requires the presence of tubing that serve as passageways for the mobile phase throughout the entire system. Separation columns are in fluidic connection with the mobile phase via this tubing. The tubing connects the column to the fluidics via fittings. Given that HPLC columns have two threaded ends, there are typically two threaded fittings used to facilitate the fluidic connection of a column to the rest of the HPLC system.

An issue that continues to trouble practitioners of chromatography is how to mount and/or secure a column while in use or otherwise. Some HPLC or UHPLC systems have a heating/cooling component that secures a column within the unit. However, access to the column in these particular systems is limited and difficult for the practitioner.

US 2006/008390 A1 discloses a HPLC column holder apparatus.

A column holder that is easy to manufacture, adjustable to hold different sized columns, enabling of tool-free column replacement, and/or robust enough to prevent breakage, would be well received in the art.

### SUMMARY

In the present disclosure, a liquid chromatography system includes: a solvent delivery system; a sample manager configured to transfer a sample into a chromatographic flow stream provided by the solvent delivery system; a column holder assembly for holding a chromatography column, the column holder assembly located in the column chamber, the column holder assembly including: a securing rail extending between a first end and a second end, the securing rail including a walled structure defining a space for receiving a chromatography column, the walled structure including at least one channel extending at least partially between the first end and the second end; a first clip attachable to the securing rail configured to hold a first end of the chromatography column in a fixed position relative to the securing rail within the space of the securing rail, the first clip including a body structure and at least one protrusion extending from the body structure, the at least one protrusion dimensioned to fit within the at least one channel of the walled structure of the securing rail, wherein the body structure is made of an elastically deformable material configured to be compressed by hand at least an amount defined by a width of the outwardly extending protrusion such that the at least one outwardly extending protrusion is insertable into the at least one channel after which the body structure is configured to expand in order to hold the first clip within the walled structure of the securing rail when the at least one protrusion is located within the at least one channel; and a second clip attachable to the securing rail and configured to hold a second end of the chromatography column in the fixed position relative the securing rail within the space of the securing rail. The liquid chromatography system further includes the chromatography column secured within the column holder assembly; and a detector located downstream from the liquid chromatography column.

Additionally or alternatively, the second clip includes a second clip body structure and at least one second clip protrusion extending from the second clip body structure, the at least one second clip protrusion dimensioned to fit within the at least one channel of the walled structure of the securing rail, wherein the body structure is made of an elastically deformable material configured to be compressed by hand at least an amount defined by a width of the outwardly extending protrusion such that the at least one outwardly extending protrusion is insertable into the at least one channel or a second channel after which the second clip body structure is configured to expand in order to hold the second clip within the walled structure of the securing rail such that the at least one second clip protrusion is located within the at least one channel or the second channel.

Additionally or alternatively, the first clip is configured to be slidably adjustable in position between the first end and the second end of the securing rail while maintaining the at least one protrusion of the first clip in the at least one channel.

Additionally or alternatively, the second clip includes at least one securing protrusion keyed to fit into a recess in the walled structure of the securing rail at a location proximate the second end, the securing protrusion configured to retain the second clip at the location proximate the second end and prevent the second clip from sliding between the first end and the second end of the securing rail.

Additionally or alternatively, the first clip includes a planar touchpoint extending from the body structure configured to be gripped by hand to slidably adjust the position of the first clip between the first end and the second end of the securing rail.

Additionally or alternatively, the first clip and the second clip are retained within the securing rail without holding pins.

Additionally or alternatively, the walled structure of the securing rail includes a U-shaped cross section extending between the first end and the second end, and wherein the body structure of the first clip includes a U-shaped cross section which corresponds to the U-shaped cross section of the securing rail.

Additionally or alternatively, the at least one protrusion of the first clip is two outward protrusions, each located at an end of the U-shaped cross section of the first clip, and wherein the at least one channel of the securing rail is two channels configured to receive the two outward protrusions of the first clip.

Additionally or alternatively, the first clip and the second clip each include two flexible arms extending from the body structure into a space defined by the body structure, each of the two flexible arms dimensioned to flex while cooperatively holding a fitting of the chromatography column such that holding the fitting creates a stress between the two flexible arms and the fitting that retains the fitting between the two flexible arms.

Additionally or alternatively, the two flexible arms are configured with a yield strength that accommodates fittings having a range of diameters, wherein the two flexible arms are configured to create the stress between the two flexible arms and the fitting across the range of diameters.

Additionally or alternatively, the two clips each include a backboard structure extending from the body structure at an axial height of the body structure that is the same as an axial height of the two flexible arms, the backboard structure configured to prevent the fitting from being inserted past a gripping location defined between the two flexible arms.

Additionally or alternatively, at least one of the first clip and the second clip include a hinged lever configured to rotate about a fulcrum axis, wherein the hinged lever is configured to facilitate removal of the chromatography column from the at least one of the first clip and the second clip.

Additionally or alternatively, the fulcrum axis includes a pin and wherein the hinged lever includes a curved body configured to curve around the chromatography column.

The present invention provides a column holder assembly for holding a chromatography column includes: a securing rail extending between a first end and a second end, the securing rail including a walled structure defining a space for receiving a chromatography column, the walled structure including at least one channel extending at least partially between the first end and the second end; a first clip attachable to the securing rail configured to hold a first end of a chromatography column in a fixed position relative to the securing rail within the space of the securing rail, the first clip including a body structure and at least one protrusion extending from the body structure, the at least one protrusion dimensioned to fit within the at least one channel of the walled structure of the securing rail, wherein the body structure is made of an elastically deformable material configured to be compressed by hand at least an amount defined by a width of the outwardly extending protrusion such that the at least one outwardly extending protrusion is insertable into the at least one channel after which the body structure is configured to expand in order to hold the first clip within the walled structure of the securing rail when the at least one protrusion is located within the at least one channel; and a second clip attachable to the securing rail and configured to hold a second end of the chromatography column in the fixed position relative the securing rail within the space of the securing rail.

Additionally or alternatively, the second clip includes a second clip body structure and at least one second clip protrusion extending from the second clip body structure, the at least one second clip protrusion dimensioned to fit within the at least one channel of the walled structure of the securing rail, wherein the body structure is made of an elastically deformable material configured to be compressed by hand at least an amount defined by a width of the outwardly extending protrusion such that the at least one outwardly extending protrusion is insertable into the at least one channel or a second channel after which the second clip body structure is configured to expand in order to hold the second clip within the walled structure of the securing rail such that the at least one second clip protrusion is located within the at least one channel or the second channel.

Additionally or alternatively, the first clip is configured to be slidably adjustable in position between the first end and the second end of the securing rail while maintaining the at least one protrusion of the first clip in the at least one channel.

Additionally or alternatively, the second clip includes at least one securing protrusion keyed to fit into a recess in the walled structure of the securing rail at a location proximate the second end, the securing protrusion configured to retain the second clip at the location proximate the second end and prevent the second clip from sliding between the first end and the second end of the securing rail.

Additionally or alternatively, the first clip includes a planar touchpoint extending from the body structure configured to be gripped by hand to slidably adjust the position of the first clip between the first end and the second end of the securing rail.

Additionally or alternatively, the first clip and the second clip are retained within the securing rail without holding pins.

Additionally or alternatively, the walled structure of the securing rail includes a U-shaped cross section extending between the first end and the second end, and wherein the body structure of the first clip includes a U-shaped cross section which corresponds to the U-shaped cross section of the securing rail.

Additionally or alternatively, the at least one protrusion of the first clip is two outward protrusions, each located at an end of the U-shaped cross section of the first clip, and wherein the at least one channel of the securing rail is two channels configured to receive the two outward protrusions of the first clip.

Additionally or alternatively, the first clip and the second clip each include two flexible arms extending from the body structure into a space defined by the body structure, each of the two flexible arms dimensioned to flex while cooperatively holding a fitting of the chromatography column such that holding the fitting creates a stress between the two flexible arms and the fitting that retains the fitting between the two flexible arms.

Additionally or alternatively, the two flexible arms are configured with a yield strength that accommodates fittings having a range of diameters, wherein the two flexible arms are configured to create the stress between the two flexible arms and the fitting across the range of diameters.

Additionally or alternatively, the two clips each include a backboard structure extending from the body structure at an axial height of the body structure that is the same as an axial height of the two flexible arms, the backboard structure configured to prevent the fitting from being inserted past a gripping location defined between the two flexible arms.

Additionally or alternatively, at least one of the first clip and the second clip include a hinged lever configured to rotate about a fulcrum axis, wherein the hinged lever is configured to facilitate removal of the chromatography column from the at least one of the first clip and the second clip.

Additionally or alternatively, the fulcrum axis includes a pin and wherein the hinged lever includes a curved body configured to curve around the chromatography column.

In the present disclosure, a device for holding a chromatography column includes: a first clip attachable to the securing rail configured to hold a first end of a chromatography column in a fixed position relative to the securing rail within the space of the securing rail, the first clip including a body structure and at least one protrusion extending from the body structure, the at least one protrusion dimensioned to fit within the at least one channel of the walled structure of the securing rail, wherein the body structure is made of an elastically deformable material configured to be compressed by hand at least an amount defined by a width of the outwardly extending protrusion such that the at least one outwardly extending protrusion is insertable into the at least one channel after which the body structure is configured to expand in order to hold the first clip within the walled structure of the securing rail when the at least one protrusion is located within the at least one channel; and a second clip attachable to the securing rail and configured to hold a second end of the chromatography column in the fixed position relative the securing rail within the space of the securing rail.

### BRIEF DESCRIPTION OF THE DRAWINGS

The above and further advantages of this invention may be better understood by referring to the following description in conjunction with the accompanying drawings, in which like reference numerals indicate like elements and features in the various figures. For clarity, not every element may be labeled in every figure. The drawings are not necessarily to scale, emphasis instead being placed upon illustrating the principles of the invention.
FIG. 1 depicts a schematic view of a liquid chromatography system, in accordance with one embodiment.
FIG. 2 depicts a perspective view of a liquid chromatography having a column manager, in accordance with one embodiment.
FIG. 3 depicts a perspective view of a column manager having an open door and housing a column extending between a first end and a second end, in accordance with one embodiment.
FIG. 4 depicts an enlarged perspective view of the second end of the column of FIG. 3, in accordance with one embodiment.
FIG. 5 depicts an enlarged perspective view of the first end of the column of FIG. 3, in accordance with one embodiment.
FIG. 6 depicts a perspective view of the column manager of FIG. 3 having the open door with no column within, in accordance with one embodiment.
FIG. 7 depicts a perspective view of a securing rail of the column manager of FIG. 3 having the clips removed, in accordance with one embodiment.
FIG. 8 depicts a top view of the securing rail of FIG. 7, in accordance with one embodiment.
FIG. 9 depicts a perspective view of the first clip of FIG. 5, in accordance with one embodiment.
FIG. 10 depicts a top view of the first clip of FIGS. 5 and 9, in accordance with one embodiment.
FIG. 11 depicts a perspective view of the second clip of FIG. 4, in accordance with one embodiment.
FIG. 12 depicts a top view of the second clip of FIGS. 4 and 11, in accordance with one embodiment.
FIG. 13 depicts a perspective view of the second clip of FIGS. 4, 11 and 12 having a hinged lever in a first position, in accordance with one embodiment.
FIG. 14 depicts a perspective view of the second clip of FIGS. 4, 11, 12 and 13 having the hinged lever in a second position, in accordance with one embodiment.
FIG. 15 depicts a perspective view of a bottom of the first clip of FIGS. 5, 9 and 10 having the hinged lever, in accordance with one embodiment.

### DETAILED DESCRIPTION

Reference in the specification to "one embodiment" or "an embodiment" means that a particular, feature, structure or characteristic described in connection with the embodiment is included in at least one embodiment of the teaching. References to a particular embodiment within the specification do not necessarily all refer to the same embodiment.

The present teaching will now be described in more detail with reference to exemplary embodiments thereof as shown in the accompanying drawings. While the present teaching is described in conjunction with various embodiments and examples, it is not intended that the present teaching be limited to such embodiments. On the contrary, the present teaching encompasses various alternatives, modifications and equivalents, as will be appreciated by those of skill in the art. Those of ordinary skill having access to the teaching herein will recognize additional implementations, modifications and embodiments, as well as other fields of use, which are within the scope of the present disclosure as described herein. The scope of the invention is defined by the appended claims.

The present invention pertains to a column holding apparatus used to secure a column in one or more positions disposed along a securing apparatus, such as a securing rail of a column holder assembly system. In accordance to embodiments described herein, a column may be supported by a pair of clips that attach to the inlet and outlet fittings, for example. The clip fits into slots in the walls of a rail of a column compartment located in, for example, a column manager system. As disclosed, at least one of the clips may be slidable along the rail. The clips may be preferably made of a flexible material such as plastic. The material may also be low in thermal conductivity in order to prevent conduction of heat to the column. Overall, the flexibility of components of the clip may be configured to allow the column to be installed simply by pushing the column into receiving locations provided by the clips. The flexing of the clips provides for tool-free column replacement and may also provide for some adjustability in holding column ends and/or column clips of different dimensions.

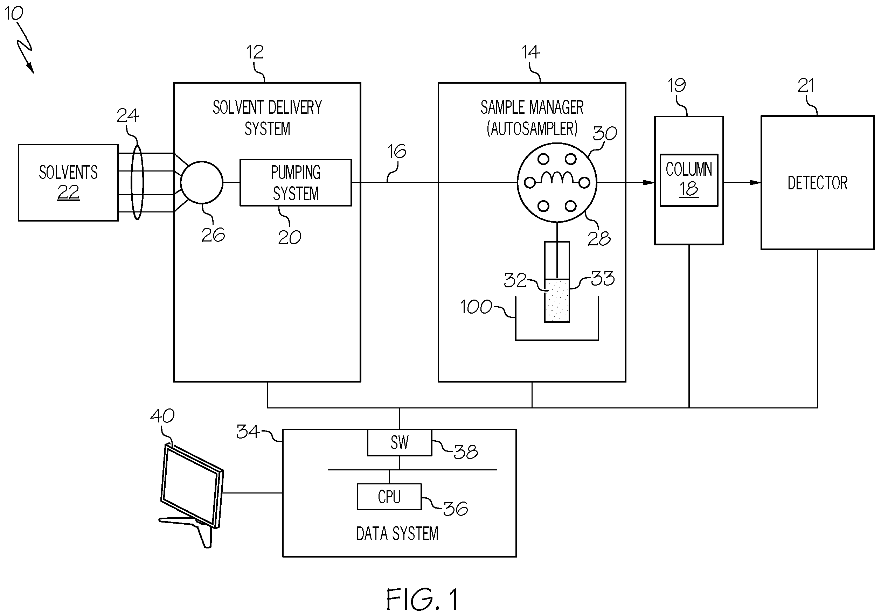

The features of the column holding apparatus and/or systems described herein may be applicable to any liquid chromatography system configured to deliver samples into a chromatographic flow stream. As one example, FIG. 1 shows an embodiment of a liquid chromatography system 10 for separating a mixture into its constituents. The liquid chromatography system 10 includes a solvent delivery system 12 in fluidic communication with a sample manager 14 (also called an injector or an autosampler) through tubing 16. The sample manager 14 is in fluidic communication with a chromatographic column 18 housed within a column manager 19. A detector 21 for example, a mass spectrometer, is in fluidic communication with the column 18 to receive the elution.

The solvent delivery system 12 includes a pumping system 20 in fluidic communication with solvent reservoirs 22 from which the pumping system 20 draws solvents (liquid) through tubing 24. In one embodiment, the pumping system 20 is embodied by a low-pressure mixing gradient pumping system having two pumps fluidically connected in series. In the low-pressure gradient pumping system, the mixing of solvents occurs before the pump, and the solvent delivery system 12 has a mixer 26 in fluidic communication with the solvent reservoirs 22 to receive various solvents in metered proportions. This mixing of solvents (mobile phase) composition that varies over time (i.e., the gradient).

The pumping system 20 is in fluidic communication with the mixer 26 to draw a continuous flow of gradient therefrom for delivery to the sample manager 14. Examples of solvent delivery systems that can be used to implement the solvent delivery system 12 include, but are not limited to, the ACQUITY Binary Solvent Manager and the ACQUITY Quaternary Solvent Manager, manufactured by Waters Corp. of Milford, Mass.

The sample manager 14 may include an injector valve 28 having a sample loop 30. The sample manager 14 operates in one of two states: a load state and an injection state. In the load state, the position of the injector valve 28 is such that the sample manager loads the sample 32 into the sample loop 30. The sample 32 is drawn from a vial contained by a sample vial carrier. "Sample vial carrier" herein means any device configured to carry a sample vial such as a well plate, sample vial carrier, or the like. In the injection state, the position of the injector valve 28 changes so that the sample manager 14 introduces the sample in the sample loop 30 into the continuously flowing mobile phase from the solvent delivery system. The mobile phase thus carries the sample into the column 18. In other embodiments, a flow through needle (FTN) may be utilized instead of a Fixed-Loop sample manager. Using an FTN approach, the sample may be pulled into the needle and then the needle may be moved into a seal. The valve may then be switched to make the needle in-line with the solvent delivery system.

The liquid chromatography system 10 may further include a data system 34 that is in signal communication with the solvent delivery system 12, the sample manager 14, the column manager 19, and/or the detector 21. The data system 34 has a processor 36 and a switch 38 (e.g. an Ethernet switch) for handling signal communication between the solvent delivery system 12, the sample manager 14, the column manager 19, and/or the detector 21. Signal communication among the various systems and instruments can be electrical or optical, using wireless or wired transmission. A host computing system 40 is in communication with the data system 34 by which a technician can download various parameters and profiles to the data system 34.

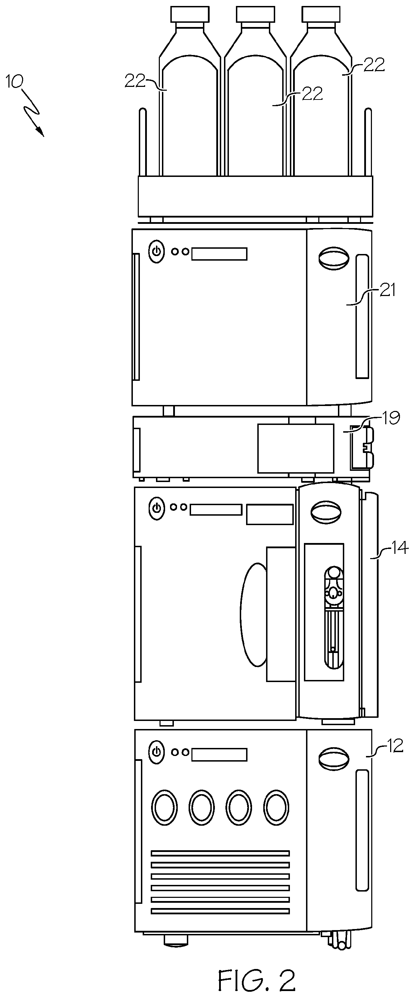

FIG. 2 shows a perspective view of the liquid chromatography system 10 including the sample manager 14, the detector 21, the column manager 19, the solvent delivery system 12, and the solvents 22. Each of the sample manager 14, the detector 21, the column manager 19, the solvent delivery system 12 may include a housing or body within which the various features may be housed, such as the data system 34, the sample loop 30 and injector valve 28, the pumping system 20, the mixer 26 and the tubing 24. The various components 12, 14, 19, 21, 22 may be interconnected with fluidic tubes and in signal communication to the data system 34 of the system. The liquid chromatography system 10 is shown with the solvent delivery system 12, sample manager 14, column manager 19, the detector 21 and a tray for holding the solvents 22 stacked together.

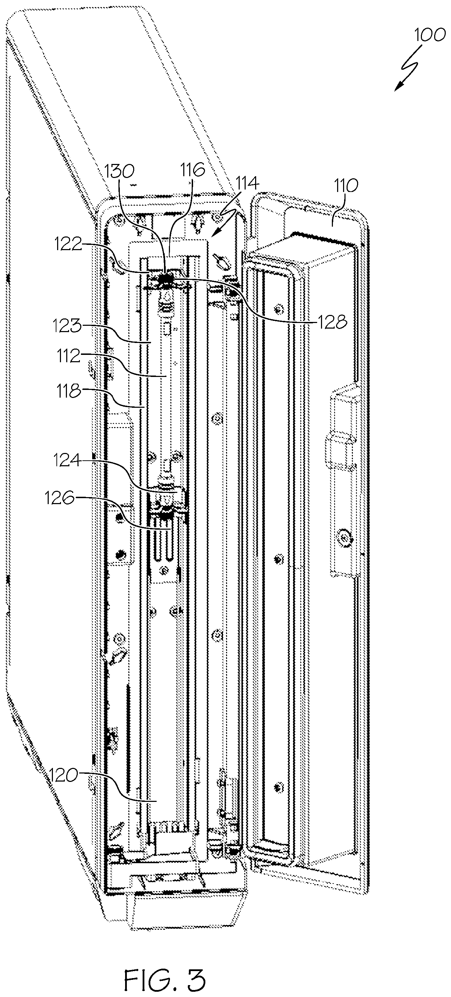

FIG. 3 depicts a perspective view of a column manager 100 having an open door 110 and housing a column 112, in accordance with one embodiment. The column manager 100 and the column 112 may be incorporated into a liquid chromatography system, such as the liquid chromatography system 10 shown in FIGS. 1 and 2. For example, the column manager 100 may be an exemplary form of the column manager 19 described hereinabove and the column 112 may likewise be an exemplary form of the column 18 described hereinabove.

Within the column manager 100 resides a column chamber 114 having a column holder assembly 116 therein. The column holder assembly 116 is shown including a securing rail 118 extending between a first end 120 and a second end 122. The securing rail 118 includes a walled structure 123 which defines a space for receiving the chromatography column 112. Attached to the securing rail 118 is a first clip 124 which is configured to hold a first end 126 of the chromatography column 112 (or a column fitting thereof) in a fixed position relative to the securing rail 118 within a space defined by the securing rail 118. Attached to the securing rail 118 is a second clip 128 which is configured to hold a second end 130 of the chromatography column 112 (or a column fitting thereof) in a fixed position relative to the securing rail 118 within the space defined by the securing rail 118.

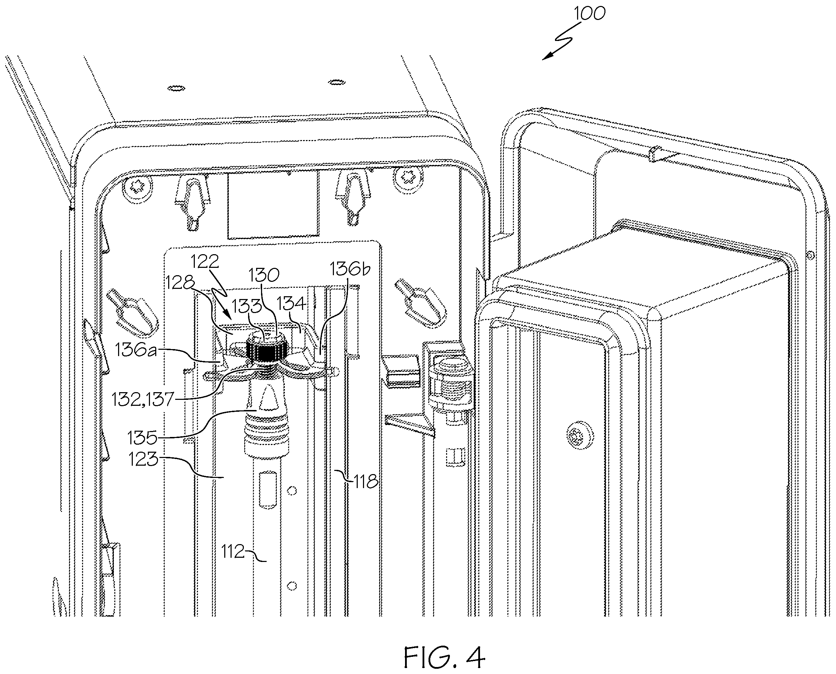

FIG. 4 depicts an enlarged perspective view of second end 122 of the column 112 of FIG. 3 held by the second clip 128, in accordance with one embodiment. The second clip 128 may be located on a top side of the column manager 100, in the case that the column manager is vertically oriented. However, in other embodiments, such as the column manager 19 shown in FIG. 2, the column manager may be oriented horizontally rather than vertically. Whatever the orientation, the second clip 128 may be configured to hold the second end 130 of the chromatography column 112. In particular, the second clip 128 is shown contacting, gripping, interfacing with, and/or attaching to a column fitting 132 of the column 112.

Specifically, the second clip 128 is shown attached to the column fitting 132 between a large diameter knob end 133 of a compression screw of the column fitting 132, and a column end nut 135 of the coupling at a narrow portion 137 of the column fitting 132 located between these two features 133, 135. In other embodiments, the second clip 124 may be configured to attach, grip, interface with or contact the body of the column 112 itself, or to the column end nut 135 or any other portion of a column assembly and/or fittings thereof.

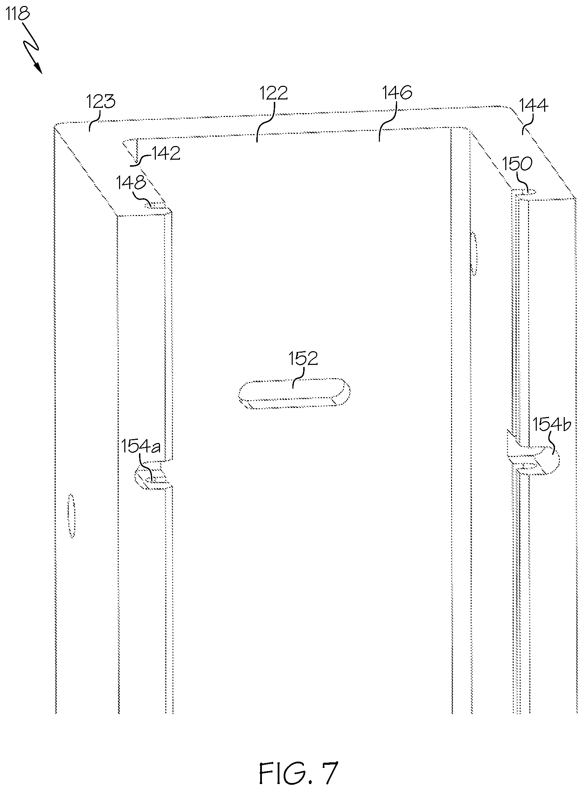

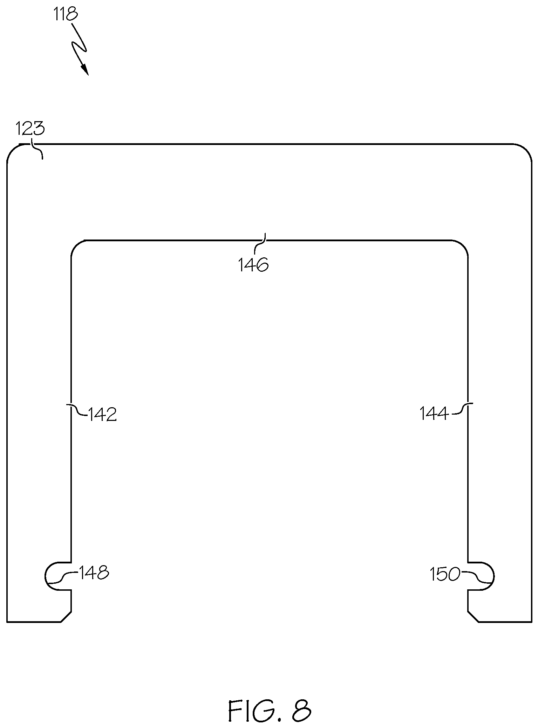

The second clip 128 includes a body structure 134. The body structure 134 extends in a generally U-shaped cross section which corresponds to a U-shaped cross section of the securing rail 118 (as shown in more detail in FIGS. 7 and 8). The body structure 134 includes an outwardly extending protrusion 136a, 136b on each end of the U-shape. The outwardly extending protrusions 136a, 136b may have mirrored dimensions, and may be outwardly extending flanges, projections, protuberances, overhangs or the like. The outwardly extending protrusions 136a, 136b may each be dimensioned to fit within a channel (shown more clearly in FIGS. 7 and 8) of the securing rail 118. The outwardly extending protrusions 136a, 136b may be disposed vertically and extend along an entire height of the second clip 128.

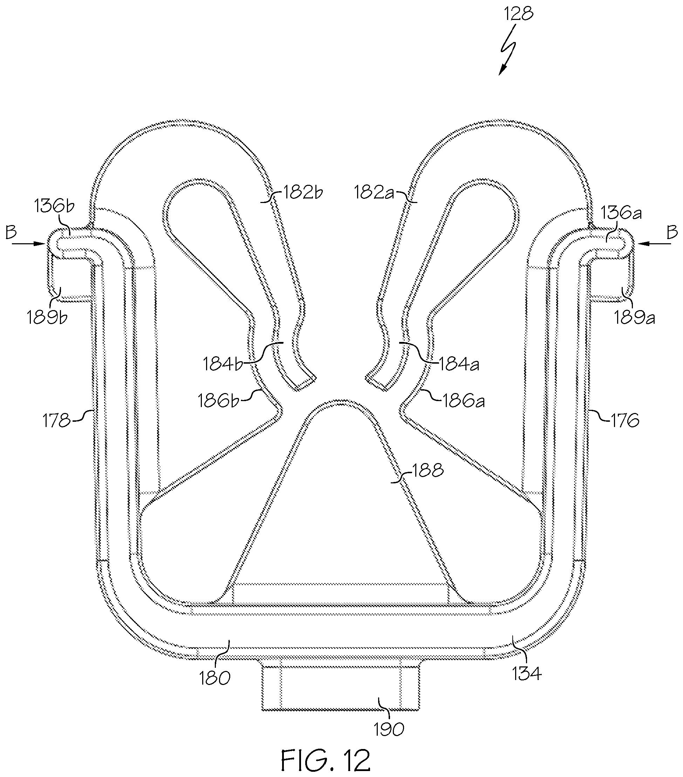

The body structure 134 may further be made of an elastically deformable material that is configured to be compressed by hand such that the body structure deflects inwardly by at least an amount defined by a width of one or both of the outwardly extending protrusions 136a, 136b in order to allow for the U-shape of the body structure 134 to be inserted into the securing rail 118 and the channel(s) thereof. Once inserted into the securing rail, as shown, the second clip 128 may thereafter be configured to expand once the inward pressure is no longer applied, thereby holding the second clip 128 within the walled structure 123 of the securing rail 118 such that the protrusions 136a, 136b are located within respective channels of the securing rail 118. The second clip 128 may include a securing protrusion (shown more particularly in FIG. 12) which extends into a recess in the walled structure of the securing rail at a location proximate the second end 122 of the securing rail 118. This securing protrusion may be configured to retain the second clip 128 in an axial position along the securing rail 118 without sliding along the length of the securing rail 118.

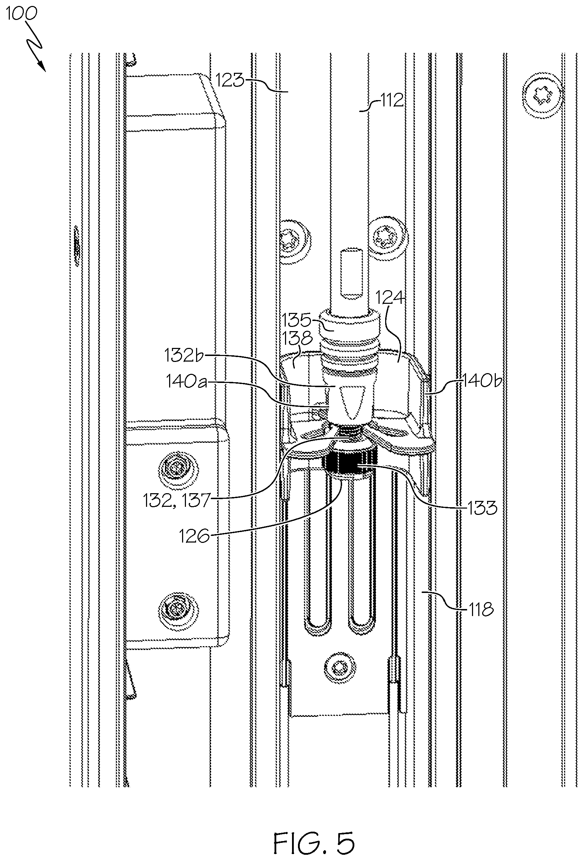

FIG. 5 depicts an enlarged perspective view of the first end 126 of the column 112 of FIG. 3 held by the first clip 124, in accordance with one embodiment. The first clip 124 may be located on a bottom side of the column manager 100, in the case that the column manager is vertically oriented. The first clip 124 may be located at an opposing end of the column manager 100 and/or the securing rail 118 and/or the column 112 as the second clip 128. However, the first clip 124 may be slidable along the securing rail 118 in order to be located within any position along the securing rail 118 between the first and second ends 120, 122 of the securing rail 118. As shown, the first clip 124 is located within a middle portion of the securing rail 118, because the column 112 extends to this middle point within the securing rail 118. The first clip 124 may be configured to hold the first end 126 of the chromatography column 112. In particular, the first clip 124 is shown contacting, gripping, interfacing with, and/or attaching to a column fitting 132 of the column 112, which may be the same as the column fitting 132 shown in FIG. 4.

Specifically, the first clip 124 is shown attached to the column fitting 132 between a large diameter knob end 133 of a compression screw of the column fitting 132, and a column end nut 135 of the coupling at a narrow portion 137 of the column fitting 132 located between these two features 133, 135. In other embodiments, the second clip 124 may be configured to attach, grip, interface with or contact the body of the column 112 itself, or to the column end nut 135 or any other portion of a column assembly and/or fittings thereof.

The first clip 124 includes a body structure 138. Like the body structure 134 of the second clip 128, the body structure 138 of the first clip 124 extends in a generally U-shaped cross section which corresponds to a U-shaped cross section of the securing rail 118 (as shown in more detail in FIGS. 7 and 8). Like the body structure 134 of the second clip 128, the body structure 138 of the first clip 124 includes an outwardly extending protrusion 140a, 140b on each end of the U-shape. The outwardly extending protrusions 140a, 140b may have mirrored dimensions, and may be outwardly extending flanges, projections, protuberances, overhangs or the like. The outwardly extending protrusions 140a, 140b may each be dimensioned to fit within a channel (shown more clearly in FIGS. 7 and 8) of the securing rail 118. The outwardly extending protrusions 140a, 140b may be disposed vertically and extend along an entire height of the first clip 124.

The body structure 138 of the first clip 124 may further be made of an elastically deformable material that is configured to be compressed by hand such that the body structure deflects inwardly by at least an amount defined by a width of one or both of the outwardly extending protrusions 140a, 140b in order to allow for the U-shape of the body structure 138 to be inserted into the securing rail 118 and the channel(s) thereof. Once inserted into the securing rail, as shown, the first clip 124 may thereafter be configured to expand once the inward pressure is no longer applied, thereby holding the first clip 124 within the walled structure 123 of the securing rail 118 such that the protrusions 140a, 140b are located within respective channels of the securing rail 118. From this position, the first clip 124 may be slidably movable along the length of the securing rail 118 between the first and second ends 120, 122 thereof by hand-applied force of an operator or technician.

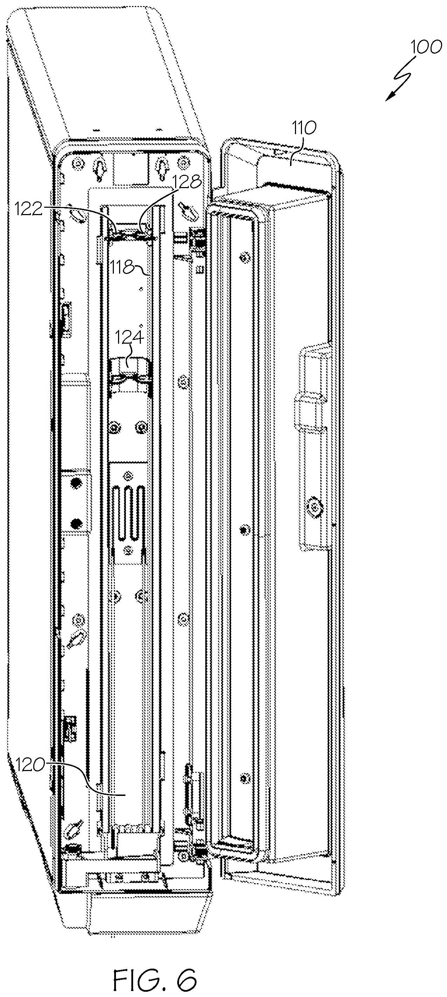

FIG. 6 depicts a perspective view of the column manager 100 of FIG. 3 having the open door 110 with no column within, in accordance with one embodiment. The column manager 100 is shown with the entirety of the securing rail 118 exposed. While the first clip 124 is shown located closer to the second end 122 (and the second clip 128) than the first end 120, the first clip 124 may be configured to slide within the securing rail 118 while remaining attached thereto, all the way down to the bottom of the securing rail 118 to the first end 120. This may ensure accommodation of columns of varying lengths.

FIG. 7 depicts a perspective view of a securing rail 118 of the column manager of FIG. 3 having the column clips removed, in accordance with one embodiment. FIG. 8 depicts a top view of the securing rail 118 of FIG. 7, in accordance with one embodiment. The securing rail 118 includes the walled structure 123 which generally includes a U-shaped cross section that extends the length of the securing rail 118. The walled structure 123 particularly includes a left wall 142 and a right wall 144, with a base 146 extending therebetween. The base 146 extends perpendicular from each of the right wall 144 and the left wall 142.

Extending lengthwise along the length of the column 146 is a first channel 148 located in the left wall 142 and a second channel 150 located in the right wall 144. Thus, each of the channels 148, 150 extend at least partially between the first end 120 and the second end 122 (shown in FIG. 3) of the securing rail 118. The U-shape cross section of the walled structure 123 of the securing rail 118 may correspond dimensionally to the U-shaped cross sections of each of the body structures 134, 138 of the second clip 128 and the first clip 124, respectively. Moreover, the protrusions 136a, 136b of the second clip 128, and the protrusions 140a, 140b of the first clip 124 may each be keyed to fit within the first and second channels 148, 150, respectively.

Thus, the first clip 124 may be configured to be slidably adjustable between the first end 120 and the second end 122 of the securing rail 118 while maintaining the extending protrusions 140a, 140b of the first clip 124 within the channels 148, 150 of the securing rail 118.

Moreover, proximate the second end 122 of the securing rail 118 may further be located keyed recesses in order to receive respective protrusions of the second clip 128 to retain the second clip 128 in the same lengthwise location in the securing rail 118. Specifically, the securing rail 118 includes a back opening or recess 152 located at the same lengthwise location along the securing rail 118 as a left side recess 154a, and a right side recess 154b. The left side recess 154a extends from the end of the left wall 142 to slightly beyond the first channel 148, while the right side recess 154b extends from the end of the right wall 144 to slightly beyond the first channel 150. Together, the recesses 152, 154a, 154b receive respective protrusions keyed to these recesses found within the second clip 128.

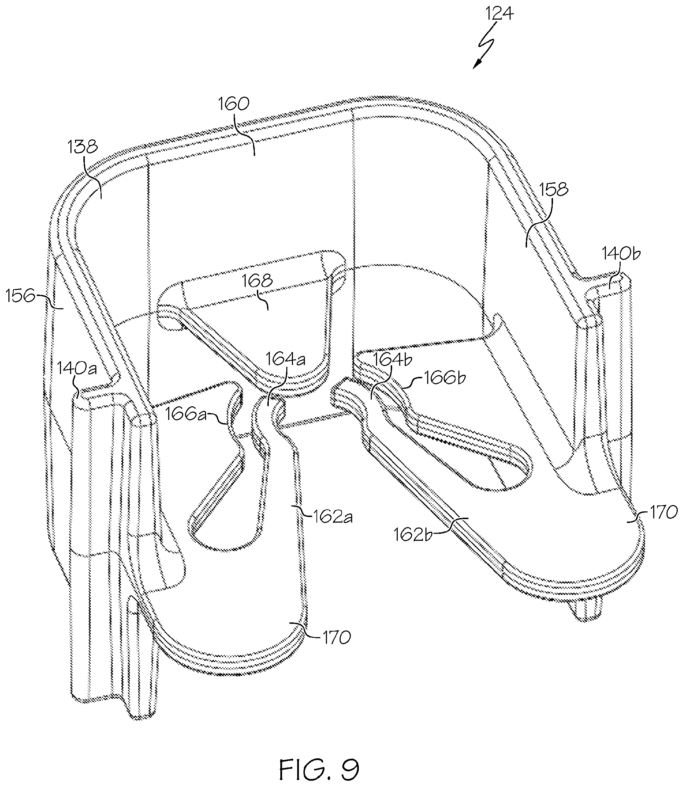

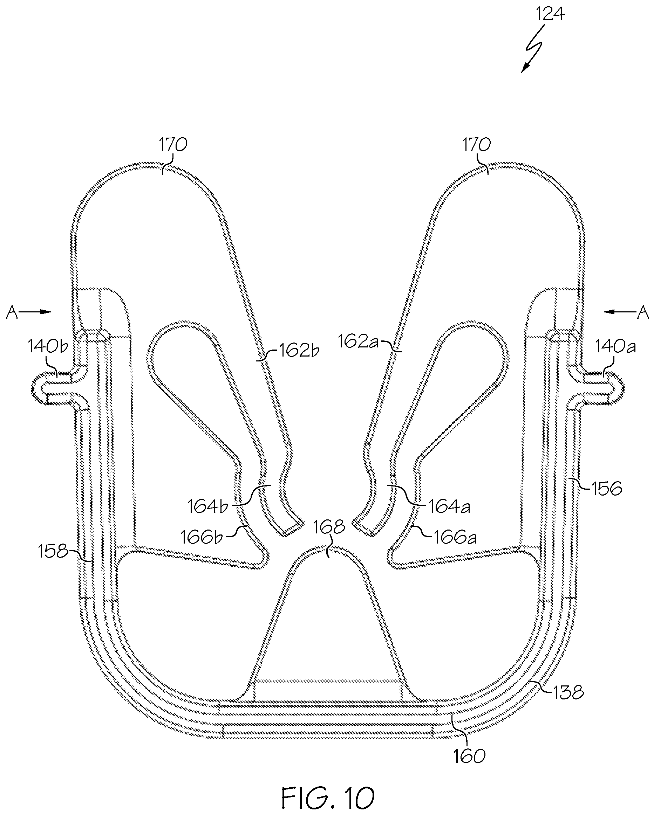

FIG. 9 depicts a perspective view of the first clip 124 of FIG. 5, in accordance with one embodiment and FIG. 10 depicts a top view of the first clip 124 of FIGS. 5 and 9, in accordance with one embodiment. As shown, the first clip 124 includes the body structure 138 which is U-shaped in cross section, and corresponding in dimensions to the U-shaped dimension of the securing rail 118. The body structure 138 includes a left wall 156, a right wall 158, and a base 160. The base 160 extends perpendicular from each of the left wall 156 and the right wall 158.

As described above, the body structure 138 of the first clip 124 may further be made of an elastically deformable material that is configured to be compressed by hand along in directions A (shown in FIG. 10) such that the body structure deflects inwardly by at least an amount defined by a width of one or both of the outwardly extending protrusions 140a, 140b in order to allow for the U-shape of the body structure 138 to be inserted into the securing rail 118 and the channel(s) thereof. After being inserted into the securing rail, the U-shape of the body structure 138 may remain under a degree of tension when the protrusions 140a, 140b are located within the channels 148, 150 of the securing rail 138. In particular, the U-shape of the body structure 138 may be dimensioned to naturally be slightly wider than the dimensions of the securing rail 138, thereby placing a slight permanent force or compression on the body structure 138 when the first clip 124 is placed within the securing rail. The amount of stress or tension placed on the body structure 138 while located within the securing rail 138 may be enough to retain the first clip 124 within position within the securing rail 118 and prevent gravity from creating undeliberate vertical sliding motion. Rather, the slidable first clip 124 may only be deliberately movable within the securing rail 138 (via hand-applied force), because of the permanent stress or tension that remains on the body structure 138 by the securing rail 138.

The U-shape of the body structure 138 defines a space within which a column may extend when the first clip 124 is holding, retaining or attached to the column. Within that space, first clip 124 includes a structure for clipping to the column in a removable but securably retainable manner. In particular, the first clip 124 includes two flexible arms 162a, 162b extending from the body structure 138 into the space defined by the U-shaped body structure 138. Each of the two flexible arms 162a, 162b are able to flex while cooperatively holding the chromatography column, and/or a column fitting thereof. In particular, each of the flexible arms 162a, 162b include curved ends 164a, 164b, respectively, which form a partially annular structure which is configured to cup a cylindrical shape.

Moreover, the flexible arms 162a, 162b, along with the curved ends 164a, 164b, may remain under tension or stress while the first clip 124 is holding a column, and/or a column fitting thereof. This stress or tension may be caused by the flexible or elastic deformation of the arms 162a, 162b when the column is located between the curved ends 164a, 164b. The two flexible arms 162a, 162b may be configured, or be made of a material, having a yield strength that accommodates fittings and/or columns having a range of diameters. Stopping structures 166a, 166b are shown located radially outward from the curved ends 164a, 164b in order to prevent further flexing of the flexible arms 162a, 162b. The dimension of the space between the curved ends 164a, 164b when the curved ends abut the stopping structures 166a, 166b, respectively, defines the largest diameter dimension receivable by the first clip 124.

The first clip 124 further includes a backboard structure 168 extending from the body structure 138 at an axial height of the body structure 138 that is the same as an axial height of the two flexible arms 162a, 162b, the curved ends 164a, 164b, and the stopping structures 166a, 166b. The backboard structure 168 may be configured to prevent the fitting and or column that is received by the first clip 124 from being inserted past a gripping location defined between the two flexible arms 162a, 162b and/or the curved ends 164a, 164b thereof. The backboard structure 168 and stopping structures 166a, 166b may provide support for a column in the lengthwise direction by contacting a column fitting 132 at a large diameter knob end 133, or a column 12 at a column end nut 135.

The first clip 124 further includes planar touchpoints 170 or oversized shoulder structures extending from the body structure 138 proximate the base of both of the flexible arms 162a, 162b. the planar touchpoint 170 may be configured to be gripped by hand to slidably adjust the position of the first clip 124 between the first end 120 and the second end 122 of the securing rail 118.

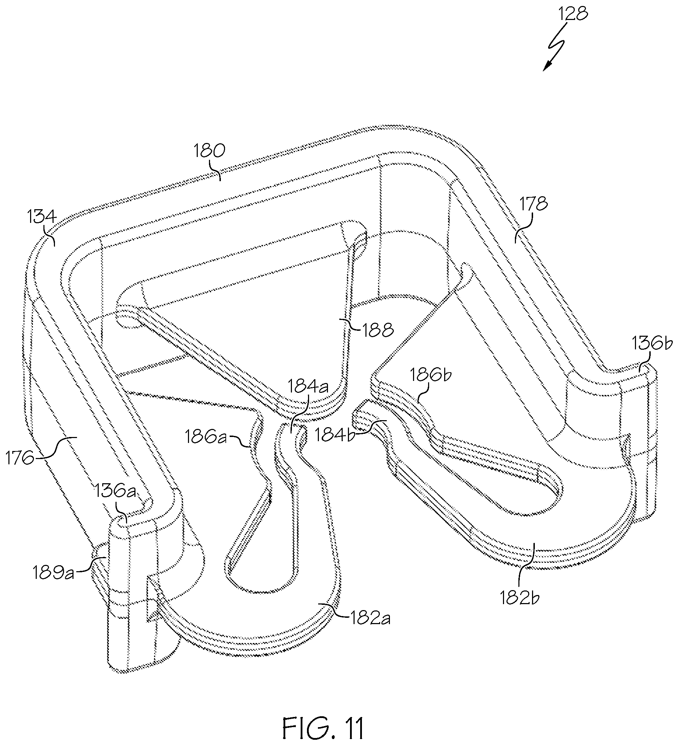

FIG. 11 depicts a perspective view of the second clip 128 of FIG. 4, in accordance with one embodiment and FIG. 12 depicts a top view of the column clip 128 of FIGS. 4 and 11, in accordance with one embodiment. As shown, the second clip 128 includes the body structure 134 which is U-shaped in cross section, and corresponding in dimensions to the U-shaped dimension of the securing rail 118. The body structure 134 includes a left wall 176, a right wall 178, and a base 180. The base 180 extends perpendicular from each of the left wall 176 and the right wall 178. Because the second clip 128 is configured to remain stationary within the securing rail 118, the body structure 134 of the second clip 128 may have a shorter profile than the body structure 138 of the first clip 124. However, the heights of the clips 124, 128 contemplated herein are not limited to the embodiments shown.

As described above, the body structure 134 of the second clip 128 may further be made of an elastically deformable material that is configured to be compressed by hand along in directions V (shown in FIG. 12) such that the body structure deflects inwardly by at least an amount defined by a width of one or both of the outwardly extending protrusions 136a, 136b in order to allow for the U-shape of the body structure 134 to be inserted into the securing rail 118 and the channel(s) thereof. After being inserted into the securing rail, the U-shape of the body structure 134 of the second clip 128 may remain under a degree of tension, similar to the tension described herein above applied to the first clip 124 by the securing rail 138.

The U-shape of the body structure 134 defines a space within which a column may extend when the second clip 128 is holding, retaining or attached to the column. Within that space, second clip 128 includes a structure for clipping to the column in a removable but securably retainable manner. In particular, the second clip 128 includes two flexible arms 182a, 182b extending from the body structure 134 into the space defined by the U-shaped body structure 134. Each of the two flexible arms 182a, 182b are dimensions to flex while cooperatively holding the chromatography column, and/or a column fitting thereof. In particular, each of the flexible arms 182a, 182b include curved ends 184a, 184b, respectively, which form a partially annular structure which is configured to cup a cylindrical shape.

Moreover, the flexible arms 182a, 182b, along with the curved ends 184a, 184b, may remain under tension or stress while the first clip 184 is holding a column, and/or a column fitting thereof. This stress or tension may be caused by the flexible or elastic deformation of the arms 182a, 182b when the column is located between the curved ends 184a, 184b. The two flexible arms 182a, 182b may be configured, or be made of a material, having a yield strength that accommodates fittings and/or columns having a range of diameters. Stopping structures 186a, 186b are shown located radially outward from the curved ends 184a, 184b in order to prevent further flexing of the flexible arms 182a, 182b. The dimension of the space between the curved ends 184a, 184b when the curved ends abut the stopping structures 186a, 186b, respectively, defines the largest diameter dimension receivable by the second clip 128.

The second clip 128 further includes a backboard structure 188 extending from the body structure 134 at an axial height of the body structure 134 that is the same as an axial height of the two flexible arms 182a, 182b, the curved ends 184a, 184b, and the stopping structures 186a, 186b. The backboard structure 188 may be configured to prevent the fitting and or column that is received by the second clip 128 from being inserted past a gripping location defined between the two flexible arms 182a, 182b and/or the curved ends 184a, 184b thereof. The backboard structure 188 and stopping structures 186a, 186b may provide support for a column in the lengthwise direction by contacting a column fitting 132 at a large diameter knob end 133, or a column 12 at a column end nut 135.

The second clip 128 further includes a plurality of securing protrusions keyed to fit into the recesses 152, 154a, 154b of the securing rail 118 proximate the second end 122 thereof. In particular, the second clip 128 includes a first securing protrusion 189a extending perpendicularly from the vertically extending protrusion 136a and may be keyed to fit into the recess 154a of the securing rail 118. Likewise, the second clip 128 includes a second securing protrusion 189b extending perpendicularly from the vertically extending protrusion 136b and may be keyed to fit into the recess 154b of the securing rail 118. Additionally, the second clip 128 includes a back protrusion 190 extending from a back side of the base 180 of the body structure 134 of the second clip 128. The back protrusion 190 may be keyed to fit into the recess 152 of the securing rail 118.

With the channels 148, 150 of the securing rail 118, and the recesses 152, 154a, 154b, the structure of the securing rail 118 may be configured to retain the first and second clips 124, 128 to the securing rail 118 without holding pins, bolts, screws or the like. Only the dimensional and flexible structure of the securing rail 118 and the clips 124, 128 maintain attachment of the clips. The first and second clips 124, 128 may each be configured to be attached to, and removed from, the securing rail 118 by hand via flexing the first and second clips inwards 124, 128 as described above. Once retained in position, the respective extending protrusions 136a, 136b of the second clip 128 maintains the second clip 128 attached to the securing rail 118 while maintaining the ability to slide lengthwise along the rail with hand applied force. Once retained in position, the respective protrusions 140a, 140b of the first clip 124, along with the securing protrusions 188a, 188b, 190 of the first clip 124 maintain the first clip 124 attached the securing rail 118 at a specific predefined position within the securing rail 118 without the ability to slide lengthwise along the securing rail 118.

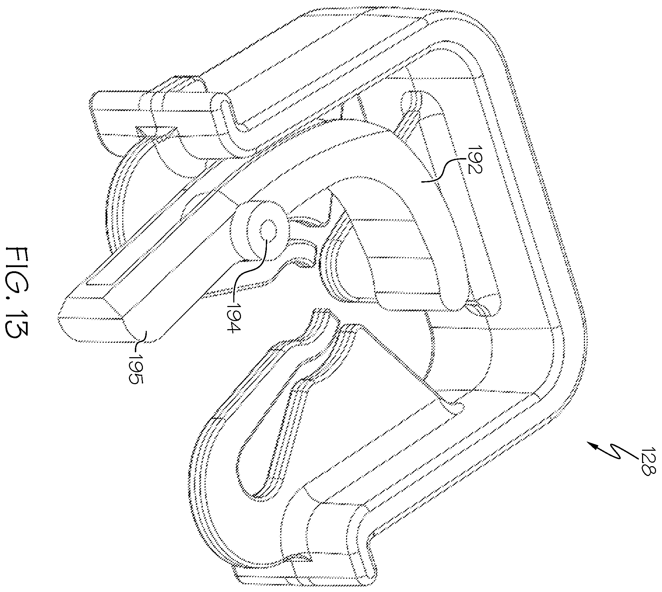

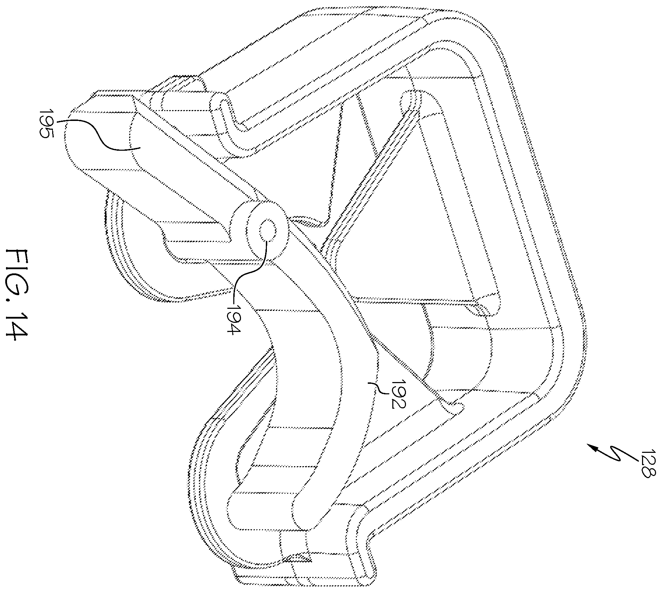

FIG. 13 depicts a perspective view of the second column clip 128 of FIGS. 4, 11 and 12 having a hinged lever 192 in a first position, in accordance with one embodiment. The hinged lever 192 is configured to rotate about a fulcrum axis 194. The fulcrum axis 194 may include a pin and/or bolt or the like, about which the hinged lever 192 may rotate. The hinged lever 192 may include a curved body which is configured to curve around a received column. In the first position, the hinged lever 192 may be positioned such that the second clip 128 may receive a column, as described hereinabove. The hinged lever 192 may be particularly configured to help remove the column from this received position. FIG. 14 depicts a perspective view of the second column clip 128 of FIGS. 4, 11 and 12 having the hinged lever 192 in a second position, in accordance with one embodiment. In this position, the hinged lever 192 has been rotated about the fulcrum axis 194. To rotate the hinged lever 192, force may be applied to the end 195 of the hinged lever 192, thereby rotating the lever so that the curved end pushes the column outward from the received location within the second column clip 128. While the hinged lever 192 is shown attached to the second column clip 128 in FIGS. 13 and 14, it should be understood that the hinged lever 192 may be applied to both or either of the first or second column clip 124, 128 in practice.

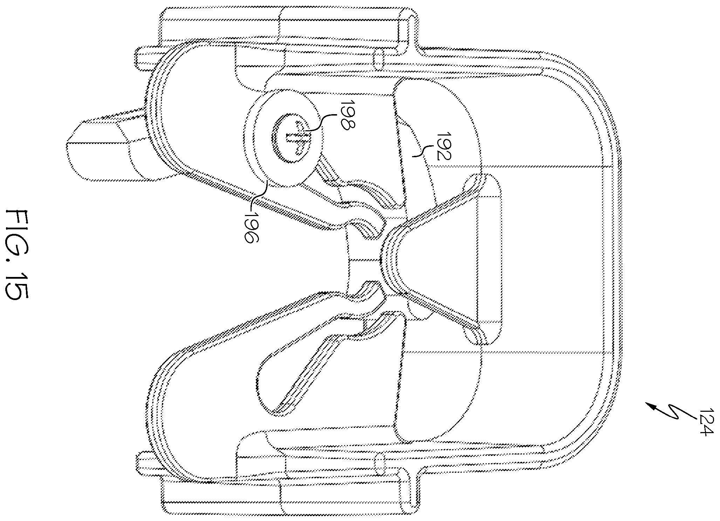

FIG. 15 depicts a perspective view of a bottom of the first column clip 124 of FIGS. 5, 9 and 10 having the hinged lever 192, in accordance with one embodiment. As shown from below, the hinged lever 192 may be attached with a bolt or screw 198, received within internal threads of the hinged lever 192 (not shown). A washer 196 is included to distribute tightening force. The bolt 198 (and thereby the fulcrum axis 194, shown in FIGS. 13, 14) may thereby extend axially within an opening defined between one of the arms of the clip and the stopping structures.

While the description herein above describes with detail and specificity the embodiments shown in the Figures, it should be understood that various alternatives are contemplated which apply the principles described herein in various other structural ways. For example, various arm dimensions and orientations are contemplated in order to flexibly retain and hold columns within a clip as described. Further, it may be possible to deploy two sliding clips, such as the first clip 124, if sliding movement is desired at both ends of the system. Alternatively, a completely fixed system is also contemplated which deploys two stationary clips, such as the second clip 128. In such an embodiment, keyed recesses may be located at both ends of a securing rail. Various keying systems to secure the second clip 128 to the securing rail 118 are contemplated whereby the protrusions are dimensioned in various ways and the securing rail 118 includes corresponding recesses. In other embodiments, the rail may include the protrusions, while the second clip 128 may include corresponding recesses. Such a structure may allow the same clip structure to act as both a sliding clip and a secured clip, depending where the clip is deployed on the securing rail.

Still further, the body structures having the protrusions fitting into recesses in the rail could be used in combination with methods for holding the column which do not include the flexible inner arms. For example, replacing the flexible inner arms with a cam style column holder, a latch, or a soft rubber holder, or any other holding mechanism is contemplated according to various embodiments. Such an embodiment may include the U-shaped body described hereinabove with the protrusion features to fit into the recesses of the rail, and could allow for sliding (such as with the structure of the first clip 124) or may remain stationary (such as with the structure of the second clip 128).

While the invention has been shown and described with reference to specific embodiments, it should be understood by those skilled in the art that various changes in form and detail may be made therein without departing from the scope of the invention as recited in the accompanying claims.

## Claims

1. A column holder assembly (116) for holding a chromatography column (112) comprising:
a securing rail (118) extending between a first end (120) and a second end (122), the securing rail (118) including a walled structure (123) defining a space for receiving a chromatography column (112), the walled structure (123) including at least one channel (148, 150) extending at least partially between the first end (120) and the second end (122);
a first clip (124) attachable to the securing rail (118) configured to hold a first end (126) of a chromatography column (112) in a fixed position relative to the securing rail (118) within the space of the securing rail (118), the first clip (124) including a body structure (138) and at least one protrusion (140a, 140b) extending from the body structure (138), the at least one protrusion (140a, 140b) dimensioned to fit within the at least one channel (148, 150) of the walled structure (123) of the securing rail (118), wherein the body structure (138) is made of an elastically deformable material configured to be compressed by hand at least an amount defined by a width of the outwardly extending protrusion (140a, 140b) such that the at least one outwardly extending protrusion (140a, 140b) is insertable into the at least one channel (148, 150) after which the body structure (138) is configured to expand in order to hold the first clip (124) within the walled structure (123) of the securing rail (118) when the at least one protrusion (140a, 140b) is located within the at least one channel (148, 150); and
a second clip (128) attachable to the securing rail (118) and configured to hold a second end (130) of the chromatography column (112) in the fixed position relative the securing rail (118) within the space of the securing rail (118).

2. A liquid chromatography system (10) comprising:
a solvent delivery system (12);
a sample manager (14) configured to transfer a sample (32) into a chromatographic flow stream provided by the solvent delivery system;
a column holder assembly (116) according to claim 1, the column holder assembly(116) located in the column chamber (114);
the chromatography column (112) secured within the column holder assembly (116); and
a detector located downstream from the liquid chromatography column (112).

3. The column holder assembly (116) of claim 1 or the liquid chromatography system (10) of claim 2, wherein the second clip includes a second clip body structure (134) and at least one second clip protrusion (136a, 136b) extending from the second clip body structure (134), the at least one second clip protrusion (136a, 136b) dimensioned to fit within the at least one channel (148, 150) of the walled structure (123) of the securing rail (118), wherein the second clip body structure (134) is made of an elastically deformable material configured to be compressed by hand at least an amount defined by a width of the at least one second clip protrusion (136a, 136b) such that the at least one second clip protrusion (136a, 136b) is insertable into the at least one channel (148, 150) or a second channel after which the second clip body structure is configured to expand in order to hold the second clip (128) within the walled structure (123) of the securing rail (118) such that the at least one second clip protrusion (136a, 136b) is located within the at least one channel (148, 150) or the second channel.

4. The column holder assembly (116) or the liquid chromatography system (10) of claim 3, wherein the first clip (124) is configured to be slidably adjustable in position between the first end (120) and the second end (122) of the securing rail (118) while maintaining the at least one protrusion (140, 140b) of the first clip (124) in the at least one channel (148, 150).

5. The column holder assembly (116) or the liquid chromatography system (10) of claim 4, wherein the second clip (128) includes at least one securing protrusion (189a, 189b) keyed to fit into a recess (152, 154a, 154b) in the walled structure (123) of the securing rail (118) at a location proximate the second end (122), the securing protrusion (189a, 189b) configured to retain the second clip at the location proximate the second end (122) and prevent the second clip from sliding between the first end (120) and the second end (122) of the securing rail (118).

6. The column holder assembly (116) or the liquid chromatography system (10) of claim 4, wherein the first clip (124) includes a planar touchpoint (170) extending from the body structure (138) configured to be gripped by hand to slidably adjust the position of the first clip between the first end (120) and the second end (122) of the securing rail (118).

7. The column holder assembly (116) of claim 1 or the liquid chromatography system (10) of claim 2, wherein the first clip (124) and the second clip (128) are retained within the securing rail (118) without holding pins.

8. The column holder assembly (116) of claim 1 or the liquid chromatography system (10) of claim 2, wherein the walled structure (123) of the securing rail (118) includes a U-shaped cross section extending between the first end (120) and the second end (122), and wherein the body structure (138) of the first clip (124) includes a U-shaped cross section which corresponds to the U-shaped cross section of the securing rail (118).

9. The column holder assembly (116) or the liquid chromatography system (10) of claim 8, wherein the at least one protrusion (140a, 140b) of the first clip (124) is two outward protrusions, each located at an end of the U-shaped cross section of the first clip (124), and wherein the at least one channel (148, 150) of the securing rail (118) is two channels configured to receive the two outward protrusions of the first clip (124).

10. The column holder assembly (116) of claim 1 or the liquid chromatography system (10) of claim 2, wherein the first clip (124) and the second clip (128) each include two flexible arms (162a, 162b, 182a, 182b) extending from the body structure (138, 134) into a space defined by the body structure (138, 134), each of the two flexible arms (162a, 162b, 182a, 182b) dimensioned to flex while cooperatively holding a fitting (132) of the chromatography column (112) such that holding the fitting (132) creates a stress between the two flexible arms (162a, 162b, 182a, 182b) and the fitting (132) that retains the fitting (132) between the two flexible arms (162a, 162b, 182a, 182b).

11. The column holder assembly (116) or the liquid chromatography system (10) of claim 10, wherein the two flexible arms (162a, 162b, 182a, 182b) are configured with a yield strength that accommodates fittings (132) having a range of diameters, wherein the two flexible arms (162a, 162b, 182a, 182b) are configured to create the stress between the two flexible arms (162a, 162b, 182a, 182b) and the fitting (132) across the range of diameters.

12. The column holder assembly (116) or the liquid chromatography system (10) of claim 10, further comprising a backboard structure (168, 188) extending from the body structure (138, 134) at an axial height of the body structure (138, 134) that is the same as an axial height of the two flexible arms (162a, 162b, 182a, 182b), the backboard structure (168, 188) configured to prevent the fitting (132) from being inserted past a gripping location defined between the two flexible arms (162a, 162b, 182a, 182b).

13. The column holder assembly (116) of claim 1 or the liquid chromatography system (10) of claim 2, wherein at least one of the first clip (124) and the second clip (128) include a hinged lever (192) configured to rotate about a fulcrum axis (194), wherein the hinged lever (192) is configured to facilitate removal of the chromatography column (112) from the at least one of the first clip (124) and the second clip (128).

14. The column holder assembly (116) or the liquid chromatography system (10) of claim 13, wherein the fulcrum axis (194) includes a pin and wherein the hinged lever (192) includes a curved body configured to curve around the chromatography column (112).

## Patentansprüche

1. Säulenhalteranordnung (116) zum Halten einer Chromatographiesäule (112), umfassend:
eine Befestigungsschiene (118), die sich zwischen einem ersten Ende (120) und einem zweiten Ende (122) erstreckt, wobei die Befestigungsschiene (118) eine Wandstruktur (123) einschließt, die einen Raum zum Aufnehmen einer Chromatographiesäule (112) definiert, wobei die Wandstruktur (123) mindestens einen Kanal (148, 150) einschließt, der sich mindestens teilweise zwischen dem ersten Ende (120) und dem zweiten Ende (122) erstreckt;
eine erste Klemme (124), die an der Befestigungsschiene (118) angebracht werden kann, die konfiguriert ist, um ein erstes Ende (126) einer Chromatographiesäule (112) in einer festen Position relativ zu der Befestigungsschiene (118) innerhalb des Raums der Befestigungsschiene (118) zu halten, wobei die erste Klemme (124) eine Körperstruktur (138) und mindestens einen Vorsprung (140a, 140b) einschließt, der sich von der Körperstruktur (138) erstreckt, wobei der mindestens eine Vorsprung (140a, 140b) dimensioniert ist, um innerhalb des mindestens einen Kanals (148, 150) der Wandstruktur (123) der Befestigungsschiene (118) zu passen, wobei die Körperstruktur (138) aus einem elastisch verformbaren Material hergestellt ist, das konfiguriert ist, um von Hand derart um mindestens eine Menge komprimiert zu werden, die durch eine Breite des sich nach außen erstreckenden Vorsprungs (140a, 140b) definiert ist, dass der mindestens eine sich nach außen erstreckende Vorsprung (140a, 140b) in den mindestens einen Kanal (148, 150) einführbar ist, wonach die Körperstruktur (138) konfiguriert ist, um sich auszudehnen, um die erste Klemme (124) innerhalb der Wandstruktur (123) der Befestigungsschiene (118) zu halten, wenn sich der mindestens eine Vorsprung (140a, 140b) innerhalb des mindestens einen Kanals (148, 150) befindet; und
eine zweite Klemme (128), die an der Befestigungsschiene (118) angebracht werden kann und konfiguriert ist, um ein zweites Ende (130) der Chromatographiesäule (112) in der festen Position relativ zu der Befestigungsschiene (118) innerhalb des Raums der Befestigungsschiene (118) zu halten.

2. Flüssigkeitschromatographiesystem (10), umfassend:
ein Lösungsmittelabgabesystem (12);
einen Probenmanager (14), der konfiguriert ist, um eine Probe (32) in einen chromatographischen Flussstrom zu übertragen, der durch das Lösungsmittelabgabesystem bereitgestellt wird;
eine Säulenhalteranordnung (116) nach Anspruch 1, wobei die Säulenhalteranordnung (116) sich in der Säulenkammer (114) befindet;
die Chromatographiesäule (112), die innerhalb der Säulenhalteranordnung (116) befestigt ist;
und
einen Detektor, der sich stromabwärts von der Flüssigkeitschromatographiesäule (112) befindet.

3. Säulenhalteranordnung (116) nach Anspruch 1 oder Flüssigkeitschromatographiesystem (10) nach Anspruch 2, wobei die zweite Klemme eine zweite Klemmenkörperstruktur (134) und mindestens einen zweiten Klemmenvorsprung (136a, 136b), der sich von der zweiten Klemmenkörperstruktur (134) erstreckt, einschließt, wobei der mindestens eine zweite Klemmenvorsprung (136a, 136b) dimensioniert ist, um in den mindestens einen Kanal (148, 150) der Wandstruktur (123) der Befestigungsschiene (118) zu passen, wobei die zweite Klemmenkörperstruktur (134) aus einem elastisch verformbaren Material hergestellt ist, das konfiguriert ist, um von Hand derart um mindestens eine Menge komprimiert zu werden, die durch eine Breite des mindestens einen zweiten Klemmenvorsprungs (136a, 136b) definiert ist, dass der mindestens eine zweite Klemmenvorsprung (136a, 136b) in den mindestens einen Kanal (148, 150) oder einen zweiten Kanal einführbar ist, wonach die zweite Klemmenkörperstruktur konfiguriert ist, um sich auszudehnen, um die zweite Klemme (128) innerhalb der Wandstruktur (123) der Befestigungsschiene (118) derart zu halten, dass der mindestens eine zweite Klemmenvorsprung (136a, 136b) sich innerhalb des mindestens einen Kanals (148, 150) oder des zweiten Kanals befindet.

4. Säulenhalteranordnung (116) oder Flüssigkeitschromatographiesystem (10) nach Anspruch 3, wobei die erste Klemme (124) konfiguriert ist, um in einer Position zwischen dem ersten Ende (120) und dem zweiten Ende (122) der Befestigungsschiene (118) gleitend einstellbar zu sein, während der mindestens eine Vorsprung (140, 140b) der ersten Klemme (124) in dem mindestens einen Kanal (148, 150) aufrechterhalten wird.

5. Säulenhalteranordnung (116) oder Flüssigkeitschromatographiesystem (10) nach Anspruch 4, wobei die zweite Klemme (128) mindestens einen Befestigungsvorsprung (189a, 189b) einschließt, der passgenau ausgebildet ist, um in eine Aussparung (152, 154a, 154b) in der Wandstruktur (123) der Befestigungsschiene (118) an einer Stelle nahe dem zweiten Ende (122) zu passen, wobei der Befestigungsvorsprung (189a, 189b) konfiguriert ist, um die zweite Klemme an der Stelle nahe dem zweiten Ende (122) zu fixieren und zu verhindern, dass die zweite Klemme zwischen dem ersten Ende (120) und dem zweiten Ende (122) der Befestigungsschiene (118) gleitet.

6. Säulenhalteranordnung (116) oder Flüssigkeitschromatographiesystem (10) nach Anspruch 4, wobei die erste Klemme (124) einen planaren Berührungspunkt (170) einschließt, der sich von der Körperstruktur (138) erstreckt, der konfiguriert ist, um von Hand gegriffen zu werden, um die Position der ersten Klemme zwischen dem ersten Ende (120) und dem zweiten Ende (122) der Befestigungsschiene (118) gleitend einzustellen.

7. Säulenhalteranordnung (116) nach Anspruch 1 oder Flüssigkeitschromatographiesystem (10) nach Anspruch 2, wobei die erste Klemme (124) und die zweite Klemme (128) ohne Haltestifte innerhalb der Befestigungsschiene (118) fixiert sind.

8. Säulenhalteranordnung (116) nach Anspruch 1 oder Flüssigkeitschromatographiesystem (10) nach Anspruch 2, wobei die Wandstruktur (123) der Befestigungsschiene (118) einen U-förmigen Querschnitt einschließt, der sich zwischen dem ersten Ende (120) und dem zweiten Ende (122) erstreckt, und wobei die Körperstruktur (138) der ersten Klemme (124) einen U-förmigen Querschnitt einschließt, der dem U-förmigen Querschnitt der Befestigungsschiene (118) entspricht.

9. Säulenhalteranordnung (116) oder Flüssigkeitschromatographiesystem (10) nach Anspruch 8, wobei der mindestens eine Vorsprung (140a, 140b) der ersten Klemme (124) zwei nach außen gerichtete Vorsprünge ist, die sich jeweils an einem Ende des U-förmigen Querschnitts der ersten Klemme (124) befinden, und wobei der mindestens eine Kanal (148, 150) der Befestigungsschiene (118) zwei Kanäle ist, die konfiguriert sind, um die zwei nach außen gerichteten Vorsprünge der ersten Klemme (124) aufzunehmen.

10. Säulenhalteranordnung (116) nach Anspruch 1 oder Flüssigkeitschromatographiesystem (10) nach Anspruch 2, wobei die erste Klemme (124) und die zweite Klemme (128) jeweils zwei flexible Arme (162a, 162b, 182a, 182b) einschließen, die sich von der Körperstruktur (138, 134) in einen Raum erstrecken, der durch die Körperstruktur (138, 134) definiert ist, wobei jeder der zwei flexiblen Arme (162a, 162b, 182a, 182b) dimensioniert ist, um sich zu biegen, während er ein Anschlussstück (132) der Chromatographiesäule (112) derart zusammenwirkend hält, dass das Halten des Anschlussstücks (132) eine Spannung zwischen den zwei flexiblen Armen (162a, 162b, 182a, 182b) und dem Anschlussstück (132) erzeugt, die das Anschlussstück (132) zwischen den zwei flexiblen Armen (162a, 162b, 182a, 182b) fixiert.

11. Säulenhalteranordnung (116) oder Flüssigkeitschromatographiesystem (10) nach Anspruch 10, wobei die zwei flexiblen Arme (162a, 162b, 182a, 182b) mit einer Streckgrenze konfiguriert sind, die Anschlussstücke (132) aufnimmt, die eine Reihe von Durchmessern aufweisen, wobei die zwei flexiblen Arme (162a, 162b, 182a, 182b) konfiguriert sind, um die Spannung zwischen den zwei flexiblen Armen (162a, 162b, 182a, 182b) und dem Anschlussstück (132) über die Reihe von Durchmessern zu erzeugen.

12. Säulenhalteranordnung (116) oder Flüssigkeitschromatographiesystem (10) nach Anspruch 10, ferner umfassend eine Rückwandstruktur (168, 188), die sich von der Körperstruktur (138, 134) auf einer axialen Höhe der Körperstruktur (138, 134) erstreckt, die gleich einer axialen Höhe der zwei flexiblen Arme (162a, 162b, 182a, 182b) ist, wobei die Rückwandstruktur (168, 188) konfiguriert ist, um zu verhindern, dass das Anschlussstück (132) über eine Greifstelle hinaus eingeführt wird, die zwischen den zwei flexiblen Armen (162a, 162b, 182a, 182b) definiert ist.

13. Säulenhalteranordnung (116) nach Anspruch 1 oder Flüssigkeitschromatographiesystem (10) nach Anspruch 2, wobei mindestens eine der ersten Klemme (124) und der zweiten Klemme (128) einen Gelenkhebel (192) einschließt, der konfiguriert ist, um um eine Drehachse (194) herum zu rotieren, wobei der Gelenkhebel (192) konfiguriert ist, um eine Entnahme der Chromatographiesäule (112) aus der mindestens einen der ersten Klemme (124) und der zweiten Klemme (128) zu erleichtern.

14. Säulenhalteranordnung (116) oder Flüssigkeitschromatographiesystem (10) nach Anspruch 13, wobei die Drehachse (194) einen Stift einschließt und wobei der Gelenkhebel (192) einen gekrümmten Körper einschließt, der konfiguriert ist, um sich um die Chromatographiesäule (112) herum zu krümmen.

## Revendications

1. Ensemble support de colonne (116) permettant de maintenir une colonne de chromatographie (112) comprenant :
un rail de fixation (118) s'étendant entre une première extrémité (120) et une seconde extrémité (122), le rail de fixation (118) comportant une structure à paroi (123) définissant un espace pour recevoir une colonne de chromatographie (112), la structure à paroi (123) comportant au moins un canal (148, 150) s'étendant au moins partiellement entre la première extrémité (120) et la seconde extrémité (122) ;
une première attache (124) pouvant être fixée au rail de fixation (118) conçue pour maintenir une première extrémité (126) d'une colonne de chromatographie (112) dans une position fixe par rapport au rail de fixation (118) dans l'espace du rail de fixation (118), la première attache (124) comportant une structure de corps (138) et au moins une saillie (140a, 140b) s'étendant depuis la structure de corps (138), l'au moins une saillie (140a, 140b) étant dimensionnée pour s'ajuster dans l'au moins un canal (148, 150) de la structure à paroi (123) du rail de fixation (118), dans laquelle la structure de corps (138) est constituée d'un matériau élastiquement déformable conçu pour être comprimé à la main d'au moins une quantité définie par une largeur de la saillie s'étendant vers l'extérieur (140a, 140b) de telle sorte que l'au moins une saillie s'étendant vers l'extérieur (140a, 140b) peut être insérée dans l'au moins un canal (148, 150) après quoi la structure de corps (138) est conçue pour s'étendre afin de maintenir la première attache (124) dans la structure à paroi (123) du rail de fixation (118) lorsque l'au moins une saillie (140a, 140b) est située dans l'au moins un canal (148, 150) ; et
une seconde attache (128) pouvant être fixée au rail de fixation (118) et conçue pour maintenir une seconde extrémité (130) de la colonne de chromatographie (112) dans la position fixe par rapport au rail de fixation (118) dans l'espace du rail de fixation (118).

2. Système de chromatographie en phase liquide (10) comprenant :
un système de distribution de solvant (12) ;
un gestionnaire d'échantillon (14) conçu pour transférer un échantillon (32) dans un flux d'écoulement chromatographique fourni par le système de distribution de solvant ;
un ensemble support de colonne (116) selon la revendication 1, l'ensemble support de colonne (116) étant situé dans la chambre de colonne (114) ;
la colonne de chromatographie (112) fixée dans l'ensemble support de colonne (116) ;
et
un détecteur situé en aval de la colonne de chromatographie en phase liquide (112).

3. Ensemble support de colonne (116) selon la revendication 1 ou système de chromatographie en phase liquide (10) selon la revendication 2, dans lequel la seconde attache comporte une structure de corps (134) de seconde attache et au moins une saillie (136a, 136b) de seconde attache s'étendant depuis la structure de corps (134) de seconde attache, l'au moins une saillie (136a, 136b) de seconde attache étant dimensionnée pour s'ajuster à l'intérieur de l'au moins un canal (148, 150) de la structure à paroi (123) du rail de fixation (118), dans lequel la structure de corps (134) de seconde attache est constituée d'un matériau élastiquement déformable conçu pour être comprimé à la main d'au moins une quantité définie par une largeur de l'au moins une saillie (136a, 136b) de seconde attache de telle sorte que l'au moins une saillie (136a, 136b) de seconde attache peut être insérée dans l'au moins un canal (148, 150) ou un second canal après quoi la structure de corps de seconde attache est conçue pour s'étendre afin de maintenir la seconde attache (128) à l'intérieur de la structure à paroi (123) du rail de fixation (118) de telle sorte que l'au moins une saillie (136a, 136b) de seconde attache est située à l'intérieur de l'au moins un canal (148, 150) ou du second canal.

4. Ensemble support de colonne (116) ou système de chromatographie en phase liquide (10) selon la revendication 3, dans lequel la première attache (124) est conçue pour être réglable en position par coulissement entre la première extrémité (120) et la seconde extrémité (122) du rail de fixation (118) tout en maintenant l'au moins une saillie (140, 140b) de la première attache (124) dans l'au moins un canal (148, 150).

5. Ensemble support de colonne (116) ou système de chromatographie en phase liquide (10) selon la revendication 4, dans lequel la seconde attache (128) comporte au moins une saillie de fixation (189a, 189b) clavetée pour s'insérer dans un évidement (152, 154a, 154b) dans la structure à paroi (123) du rail de fixation (118) à un emplacement proche de la seconde extrémité (122), la saillie de fixation (189a, 189b) étant conçue pour retenir la seconde attache à l'emplacement proche de la seconde extrémité (122) et empêcher la seconde attache de glisser entre la première extrémité (120) et la seconde extrémité (122) du rail de fixation (118).

6. Ensemble support de colonne (116) ou système de chromatographie en phase liquide (10) selon la revendication 4, dans lequel la première attache (124) comporte un point de contact plan (170) s'étendant depuis la structure de corps (138) conçu pour être saisi à la main pour ajuster de manière coulissante la position de la première attache entre la première extrémité (120) et la seconde extrémité (122) du rail de fixation (118).

7. Ensemble support de colonne (116) selon la revendication 1 ou système de chromatographie en phase liquide (10) selon la revendication 2, dans lequel la première attache (124) et la seconde attache (128) sont retenues à l'intérieur du rail de fixation (118) sans goupilles de maintien.

8. Ensemble support de colonne (116) selon la revendication 1 ou système de chromatographie en phase liquide (10) selon la revendication 2, dans lequel la structure à paroi (123) du rail de fixation (118) comporte une section transversale en forme de U s'étendant entre la première extrémité (120) et la seconde extrémité (122), et dans lequel la structure de corps (138) de la première attache (124) comporte une section transversale en forme de U qui correspond à la section transversale en forme de U du rail de fixation (118).

9. Ensemble support de colonne (116) ou système de chromatographie en phase liquide (10) selon la revendication 8, dans lequel l'au moins une saillie (140a, 140b) de la première attache (124) est deux saillies vers l'extérieur, chacune située à une extrémité de la section transversale en forme de U de la première attache (124), et dans lequel l'au moins un canal (148, 150) du rail de fixation (118) est deux canaux conçus pour recevoir les deux saillies vers l'extérieur de la première attache (124).

10. Ensemble support de colonne (116) selon la revendication 1 ou système de chromatographie en phase liquide (10) selon la revendication 2, dans lequel la première attache (124) et la seconde attache (128) comportent chacune deux bras flexibles (162a, 162b, 182a, 182b) s'étendant depuis la structure de corps (138, 134) dans un espace défini par la structure de corps (138, 134), chacun des deux bras flexibles (162a, 162b, 182a, 182b) étant dimensionné pour fléchir tout en maintenant de manière coopérative un raccord (132) de la colonne de chromatographie (112) de telle sorte que le maintien du raccord (132) crée une contrainte entre les deux bras flexibles (162a, 162b, 182a, 182b) et le raccord (132) qui retient le raccord (132) entre les deux bras flexibles (162a, 162b, 182a, 182b).

11. Ensemble support de colonne (116) ou système de chromatographie en phase liquide (10) selon la revendication 10, dans lequel les deux bras flexibles (162a, 162b, 182a, 182b) sont conçus avec une limite d'élasticité qui s'adapte à des raccords (132) ayant une plage de diamètres, dans lequel les deux bras flexibles (162a, 162b, 182a, 182b) sont conçus pour créer la contrainte entre les deux bras flexibles (162a, 162b, 182a, 182b) et le raccord (132) sur toute la plage de diamètres.

12. Ensemble support de colonne (116) ou système de chromatographie en phase liquide (10) selon la revendication 10, comprenant en outre une structure de panneau arrière (168, 188) s'étendant depuis la structure de corps (138, 134) à une hauteur axiale de la structure de corps (138, 134) qui est identique à une hauteur axiale des deux bras flexibles (162a, 162b, 182a, 182b), la structure de panneau arrière (168, 188) étant conçue pour empêcher le raccord (132) d'être inséré au-delà d'un emplacement de préhension défini entre les deux bras flexibles (162a, 162b, 182a, 182b).

13. Ensemble support de colonne (116) selon la revendication 1 ou système de chromatographie en phase liquide (10) selon la revendication 2, dans lequel au moins l'une de la première attache (124) et de la seconde attache (128) comporte un levier articulé (192) conçu pour tourner autour d'un axe de pivotement (194), dans lequel le levier articulé (192) est conçu pour faciliter le retrait de la colonne de chromatographie (112) de l'au moins une de la première attache (124) et de la seconde attache (128).

14. Ensemble support de colonne (116) ou système de chromatographie en phase liquide (10) selon la revendication 13, dans lequel l'axe de pivotement (194) comporte une broche et dans lequel le levier articulé (192) comporte
un corps incurvé conçu pour s'incurver autour de la colonne de chromatographie (112).
